# EUROPEAN PATENT SPECIFICATION

(11) **EP 3 021 497 B1**
(45) Date of publication and mention of the grant of the patent: **30.12.2020**
(21) Application number: 15182195.6
(22) Date of filing: 24.08.2015
(51) Int. Cl.: H04L 29/06, H04B 7/185, H04W 12/08, H04W 12/06

(54) **SYSTEM AND METHOD FOR SECURE WIRELESS COMMUNICATIONS BETWEEN A VEHICLE AND A SOURCE**
SYSTEM UND VERFAHREN FÜR SICHERE DRAHTLOSE KOMMUNIKATION ZWISCHEN EINEM FAHRZEUG UND EINER QUELLE
SYSTÈME ET PROCÉDÉ PERMETTANT DE SÉCURISER DES COMMUNICATIONS SANS FIL ENTRE UN VÉHICULE ET UNE SOURCE

(30) Priority: 21.10.2014 US 201414519269
(43) Date of publication of application: 18.05.2016
(73) Proprietor: The Boeing Company, Chicago, IL 60606-1596 (US)
(72) Inventor: Nguyen, Daniel, Chicago, IL 60606-2016 (US); Shelton, Jason W., Chicago, IL 60606-2016 (US); Mitchell, Timothy M., Chicago, IL (US)
(74) Representative: Hylarides, Paul Jacques

(56) References cited:
- EP-A1- 2 315 367
- EP-A2- 2 040 392
- WO-A1-2013/013243
- US-B1- 8 767 537
- Krishna Sampigethaya ET AL: "ENHANCING THE "LAST MILE" COMMUNICATIONS AT AIRPORTS", INTERNATIONAL CONGRESS OF THE AERONAUTICAL SCIENCES, 28 September 2012 (2012-09-28), pages 1-10, XP055195448, Retrieved from the Internet: URL:http://www.icas.org/ICAS_ARCHIVE/ICAS2 012/PAPERS/733.PDF [retrieved on 2015-06-12]

## Description

This disclosure relates to systems and methods for ensuring secure wireless communications between a vehicle and a source.

Vehicles such as aircraft often wirelessly communicate with other sources. During this wireless communication, security-critical information regarding the vehicle or the source may need to be communicated. It is important to ensure that this data is only wirelessly communicated between the intended vehicle and source to prevent unauthorized use of the data by hackers. In the past, hackers have attempted to eavesdrop on wireless communications between a vehicle and a source by forming an independent connection between the vehicle and the source without being detected.

EP 2 315 367 A1 describes a method to facilitate securing of air-to-ground communications for an aircraft. The method includes receiving security management information at the aircraft via at least one broadband data link prior to takeoff of the aircraft. The security management information is received for ground entities that can be communicatively coupled with the aircraft traveling on a flight path. The method of securing avionics also includes validating the security management information for the ground entities, and storing the validated security management information for the ground entities in the aircraft. The validating and storing of security management information occur prior to takeoff of the aircraft.

US 8 767 537 B1 describes a method and apparatus for managing wireless devices on an aircraft. A map for a number of wireless devices on the aircraft is generated. The number of wireless devices is identified in a profile. A risk for the number of wireless devices on the aircraft is identified during operation of the aircraft using state information for the aircraft and the profile. Access to a wireless network on the aircraft by the number of wireless devices is managed based on the risk identified for the number of wireless devices.

WO 2013/013243 A1 describes systems and methods for FAA-certified avionics devices to safely interface with non-certified mobile telecommunications devices before, during, and after flight. Data transmitted to the certified devices do not affect functionality of the certified device unless and until a user acknowledges and/or confirms the data on the certified device. Thus, the integrity of the certified device is maintained.

A system and method is needed to ensure secure wireless communications between a vehicle and a source.

In one embodiment of the disclosure, a system for secure wireless communications according to claim 1 is disclosed.

In another embodiment, a non-transitory computer readable medium according to claim 11 is disclosed.

In still another embodiment, a method for securely wirelessly communicating according to claim 12 is disclosed.

The scope of the present disclosure is defined solely by the appended claims and is not affected by the statements within this summary.

### BRIEF DESCRIPTION OF THE DRAWINGS

The disclosure can be better understood with reference to the following drawings and description. The components in the figures are not necessarily to scale, emphasis instead being placed upon illustrating the principles of the disclosure.
Figure 1 illustrates one embodiment of a box diagram of a system for secure wireless communications between a vehicle and a source;
Figure 2 illustrates one embodiment implementing a variation of the system of Figure 1 in which the vehicle is an aircraft and the source is a portable maintenance device;
Figure 3 illustrates another embodiment implementing another variation of the system of Figure 1 in which the vehicle is an aircraft and the source is an aircraft terminal computer; and
Figure 4 is a flowchart of one embodiment of a method for securely wirelessly communicating between a vehicle and a source.

### DETAILED DESCRIPTION

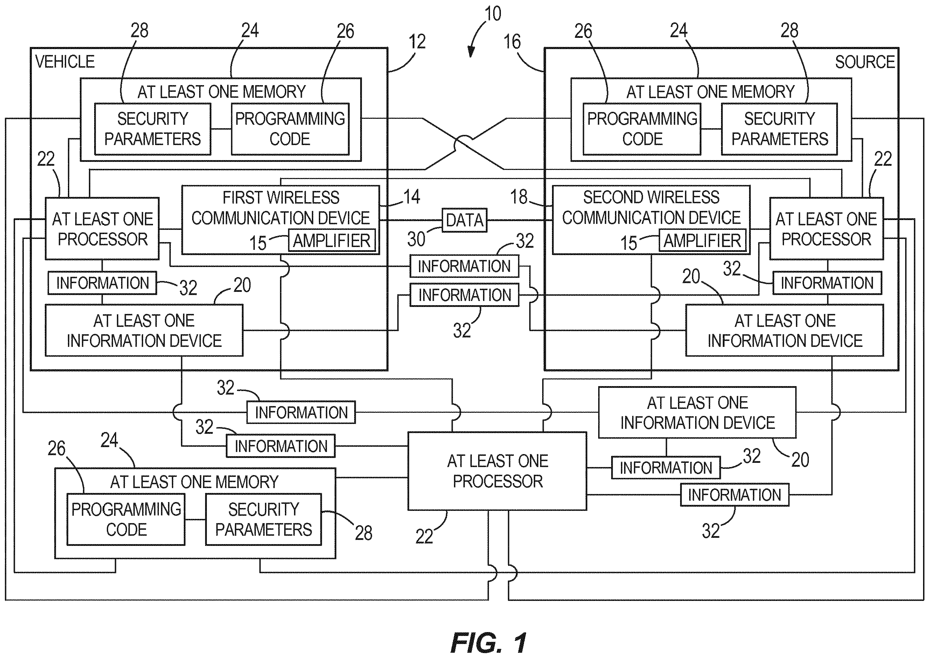

Figure 1 illustrates one embodiment of a box diagram of a system 10 for secure wireless communications between a vehicle 12 and a source 16. The system 10 includes the vehicle 12, a first wireless communication device 14 which includes an amplifier 15, the source 16, a second wireless communication device 18 which includes an amplifier 15, at least one information device 20, at least one processor 22, and at least one memory 24 containing programming code 26 and security parameters 28. In other embodiments, the system 10 may contain a varying number or type of the components in differing configurations.

The vehicle 12 may comprise an aircraft. In other embodiments, the vehicle 12 may vary. The first wireless communication device 14 may be disposed on the vehicle 12. The second wireless communication device 18 may be disposed on the source 16. The second wireless communication device 18 is configured to wirelessly communicate data 30 with, to, from, or between the first wireless communication device 14. The amplifiers 15 of the first and second wireless communication devices 14 and 18 are configured to amplify the wireless signal transmitting the data 30. The source 16 may comprise an aircraft terminal, a land or sea based antenna, an air-traffic control system, an aircraft, or a satellite. In other embodiments, the source 16 may vary.

The at least one information device 20 is configured to provide information 32 regarding the vehicle 12 or the source 16 to the at least one processor 22. The at least one information device 20 may comprise a radio-frequency identification device configured to provide information 32 comprising an identification of the vehicle 12 or the source 16, a proximity sensor configured to provide information 32 comprising a location and/or a distance of/between the vehicle 12 and the source 16, a security-code providing device configured to provide information 32 comprising a security-code, a sensor configured to provide information regarding the vehicle 12 and/or source 16 (such as a sensor which determines dimensions of the vehicle 12 to identify the vehicle 12 based on the detected dimensions, or another type of sensor which provides varying information regarding the vehicle 12 and/or the source 16), or another type of information device 20 configured to provide varying types of information 32. In the instant embodiment, the at least one information device 20 comprises a plurality of information devices 20 with one of the information devices 20 attached to the vehicle 12, one of the information devices 20 attached to the source 16, and one of the information devices 20 disposed apart from the vehicle 12 and the source 16. In other embodiments, any number, type, configuration, or location of the at least one information device 20 may be used to provide varying types of information 32 to the at least one processor 22.

The at least one processor 22 is in electronic communication with the at least one information device 20, the first wireless communication device 14, and with the second wireless communication device 18. In the instant embodiment, the at least one processor 22 comprises a plurality of processors 22 with one of the processors 22 attached to the vehicle 12, one of the processors 22 attached to the source 16, and one of the processors 22 disposed apart from the vehicle 12 and the source 16. In other embodiments, the at least one processor 22 may vary in number, location, or type.

The at least one memory 24 (also referred to herein as a non-transitory computer readable medium) is in electronic communication with the at least one processor 22. The at least one memory 24 contains the programming code 26 for execution by the at least one processor 22. In the instant embodiment, the at least one memory 24 comprises a plurality of memories 24 with one of the memories 24 contained in the vehicle 12, one of the memories 24 contained in the source 16, and other of the memories contained apart from the vehicle 12 and the source 16. In other embodiments, the at least one memory 24 may vary in number, location, or type. The programming code 26 is configured to only allow wireless communications of the data 30 between the first wireless communication device 14 and the second wireless communication device 18 when the security parameters 28, stored in the at least one memory 24, regarding the vehicle 12 or the source 16 are met based on the information 32 provided by the at least one information device 20. The programming code 26 is configured to allow the amplifiers 15 of the first and second wireless communication devices 14 and 18 to amplify the wireless signal transmitting the data 30 if the security parameters 28 are met by all vehicles and/or by all sources (including vehicle 12 and any other vehicles and/or including source 16 and any other sources) within the amplified wireless transmission zone.

In one embodiment, the security parameters 28 may comprise a location or a distance requirement of/between the vehicle 12 and the source 16. In another embodiment, the security parameters 28 may comprise an identification of the vehicle 12 or the source 16. In an additional embodiment, the security parameters 28 may comprise a time when the vehicle 12 or the source 16 should be at a certain location. In still another embodiment, the security parameters 28 may comprise a security code. In yet another embodiment, the security parameters 28 may vary in number or type. In one embodiment, the security parameters 28 which must be met in order for wireless communications to take place between the vehicle 12 and the source 16 may vary in a number of conditions which must be met for different types of the data 30.

In one embodiment, the data 30 may comprise passenger inflight entertainment data, aircraft information system data, and/or aircraft control data. When the data 30 comprises the aircraft control data, the security parameters 28 may have the most conditions which must be met before wireless communications take place. When the data 30 comprises the inflight entertainment data, the security parameters 28 may have the least conditions which must be met before wireless communications take place. When the data 30 comprises the aircraft information, the security parameters 28 may have an intermediate level of the conditions which must be met before the wireless communications take place.

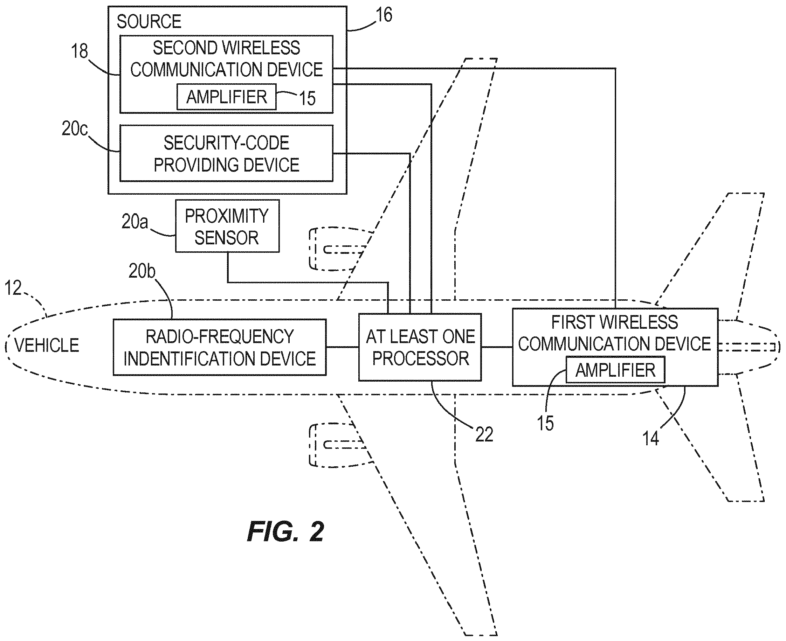

Figure 2 illustrates one embodiment implementing a variation of the system 10 of Figure 1 in which the vehicle 12 is an aircraft and the source 16 is a portable maintenance device. In one embodiment, the one information device 20 is a new discrete (e.g., a security discrete), that is used for security verifications prior to establishing a wireless connection, and the wireless connection is external to the physical structure of the airplane, as conventional airplane discretes can only account for information that is physically related to each airplane. This new security discrete limits exposure to cyber attacks outside of the airplane.

Advantageously, the security that can be leveraged from the system 10 has tremendous value. In some embodiments, the system 10 reduces cyber attacks from outside the vehicle 12 (e.g., an airplane) by requiring the source of the attacks to be within a certain distance, which decreases the exposures to a few seconds. As an example, currently a wireless connection between an aircraft and the backoffice/gatelink has the potential to be exposed to a man-in-the middle attack due to its massive attack surface, where a man in the middle attack is a cyber attack where the attacker eavesdrops on wireless communication by forming an independent connection between the victims and relays messages between them. The system 10 allows the aircraft to initiate the wireless connections when the plane is only within a predetermined value for proximity; thus decreasing the exposure to be cyber attacked to a few seconds.

As shown in Figure 2, the at least one information device 20 comprises a proximity sensor 20a which senses the distance between the vehicle 12 and the source 16, a radio-frequency identification device 20b which provides an identification of the vehicle 12, and a security-code providing device 20c which provides a security code linked to the vehicle 12 and/or the source 16. The at least one processor 22 will allow the first wireless communication device 14 of the vehicle 12 and the second wireless communication device 18 of the source 16 to begin wirelessly communicating, to make contact with one another but not transfer aircraft control data, when the distance between the vehicle 12 and the source 16 is less than or equal to a required distance threshold. The at least one processor 22 will not allow wireless communications of aircraft control data between the first wireless communication device 14 of the vehicle 12 and the second wireless communication device 18 of the source 16 until the distance between the vehicle 12 and the source 16 is less than or equal to a required distance threshold, until the vehicle 12 is identified as being the particular aircraft which needs to be maintained, and until the security code associated with that vehicle 12 and/or source 16 has been confirmed. The at least one processor 22 will only allow the amplifiers 15 of the first and second wireless communication devices 14 and 18 to amplify the wireless signal transmitting the aircraft control data if the security parameters are met by all vehicles and/or by all sources (including vehicle 12 and any other vehicles and/or including source 16 and any other sources) within the amplified wireless transmission zone. In other embodiments, a varying number and type of the at least one information device 20 providing varying types of information may be used in conjunction with the at least one processor 22 requiring varying security parameters to be met based on the type of data to be wirelessly communicated between the first wireless communication device 14 of the vehicle 12 and the second wireless communication device 18 of the source 16 before allowing the wireless communications of the data. For instance, in one embodiment the at least one information device 20 may comprise a sensor which detects dimensions of the vehicle 12 to identify the vehicle 12 based on the detected dimensions. For instance, different types of aircraft have different known dimensions for landing gear, wingtip distance, tail height distance, etc. Based on the dimensions of the aircraft which are detected by the sensor, the particular type of aircraft can be identified and that identification can be used to fulfill an identification security parameter required for wireless communication for a particular type of data. In still other embodiments, the at least one information device 20 may further vary.

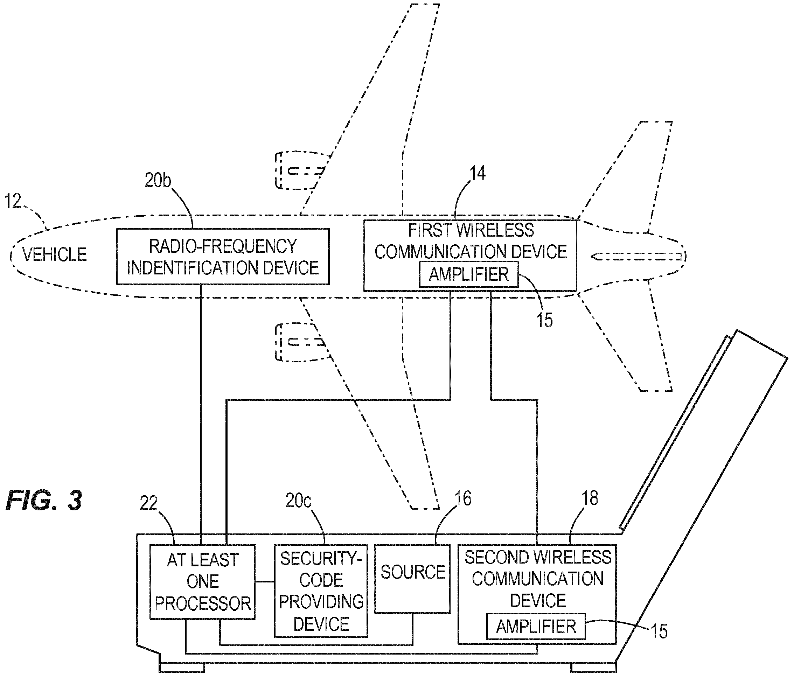

Figure 3 illustrates another embodiment implementing another variation of the system 10 of Figure 1 in which the vehicle 12 is an aircraft and the source 16 is an aircraft terminal computer. As shown in Figure 3, the at least one information device 20 comprises a proximity sensor 20a which senses the distance between the vehicle 12 and the source 16, a radio-frequency identification device 20b which provides an identification of the vehicle 12, and a security-code providing device 20c which provides a security code linked to the vehicle 12 and/or the source 16. The at least one processor 22 will not allow wireless communications of aircraft control data between the first wireless communication device 14 of the vehicle 12 and the second wireless communication device 18 of the source 16 until the distance between the vehicle 12 and the source 16 is less than or equal to a required distance threshold, until the vehicle 12 is identified as being the particular aircraft which is supposed to be located at that position at the aircraft terminal, and until the security code associated with that vehicle 12 and/or source 16 has been confirmed. The at least one processor 22 will only allow the amplifiers 15 of the first and second wireless communication devices 14 and 18 to amplify the wireless signal transmitting the aircraft control data if the security parameters are met by all vehicles and/or by all sources (including vehicle 12 and any other vehicles and/or including source 16 and any other sources) within the amplified wireless transmission zone. In other embodiments, a varying number and type of the at least one information device 20 providing varying types of information may be used in conjunction with the at least one processor 22 requiring varying security parameters to be met based on the type of data to be wirelessly communicated between the first wireless communication device 14 of the vehicle 12 and the second wireless communication device 18 of the source 16 before allowing the wireless communications of the data.

For instance, in one embodiment the security parameters for allowing wireless communication of aircraft information system data between the vehicle 12 and the source 16 may only require that the distance between the vehicle 12 and the source 16 is less than or equal to a required distance threshold, and that the vehicle 12 is identified as being the particular aircraft which is supposed to be located at that position at the aircraft terminal without requiring the security code. In yet another embodiment, the security parameters for allowing wireless communication of inflight entertainment data between the first communication device 14 of the vehicle 12 and the second communication device 18 of the source 16 may only require that the distance between the vehicle 12 and the source 16 is less than or equal to a required distance threshold without requiring that the vehicle 12 be identified as being the particular aircraft which is supposed to be located at that position at the aircraft terminal and without requiring the security code.

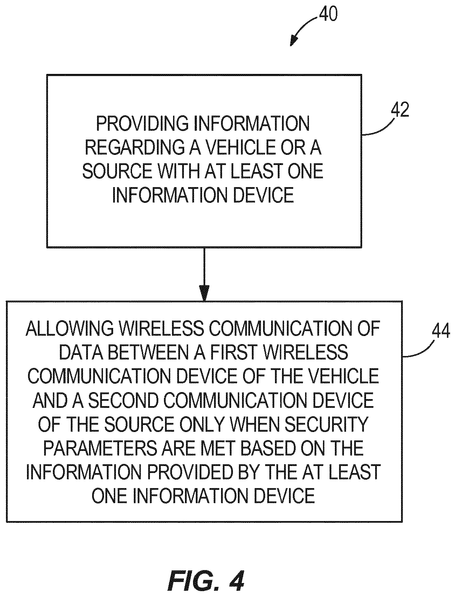

Figure 4 is a flowchart of one embodiment of a method 40 for securely wirelessly communicating between a vehicle and a source. The method 40 may utilize the system 10 disclosed herein. In other embodiments, the method may utilize varying systems having varying components. In step 42, information is provided regarding a vehicle or a source with at least one information device. The vehicle may comprise an aircraft or another type of vehicle. The source may comprise an aircraft terminal, a land or sea based antenna, an air-traffic control system, an aircraft, a satellite, or another type of source. The at least one information device may comprise a radio-frequency identification device, a proximity sensor, a sensor, a security-code providing device, or another type of information device. In step 44, wireless communication of data between a first wireless communication device of the vehicle and a second communication device of the source is only allowed when security parameters are met based on the information provided by the at least one information device. Amplifiers of the first and second wireless communication devices may amplify the wireless signal transmitting the data if the security parameters are met by all vehicles and/or by all sources within the amplified wireless transmission zone. The security parameters may comprise a distance or location requirement of/between the vehicle and/or the source, an identification of the vehicle and/or the source, a time when the vehicle and/or the source should be at a certain location, a security code, or other types of security parameters. The security parameters which must be met for wireless communication between the vehicle and the source may vary in a number of conditions which must be met for different types of data.

For instance, the conditions which must be satisfied for wireless communication of passenger inflight entertainment data may be less than the conditions which must be satisfied for wireless communication of aircraft information system data. Similarly, the conditions which must be satisfied for wireless communication of aircraft control data may be greater than the conditions which must be satisfied for wireless communication of aircraft information system data. In other embodiments, one or more of the steps of the method 40 may be varied in substance or order, one or more steps of the method 40 may not be followed, or one or more additional steps may be added to the method 40.

One or more embodiments of the disclosure may improve the security of wireless communications between a vehicle and a source using varying levels of security parameters for data having varying levels of sensitivity. This will reduce the likelihood of a hacker obtaining unauthorized data through a cyber-attack.

The Abstract is provided to allow the reader to quickly ascertain the nature of the technical disclosure. It is submitted with the understanding that it will not be used to interpret or limit the scope or meaning of the claims. In addition, in the foregoing Detailed Description, it can be seen that various features are grouped together in various embodiments for the purpose of streamlining the disclosure. This method of disclosure is not to be interpreted as reflecting an intention that the claimed embodiments require more features than are expressly recited in each claim. Rather, as the following claims reflect, inventive subject matter lies in less than all features of a single disclosed embodiment. Thus the following claims are hereby incorporated into the Detailed Description, with each claim standing on its own as a separately claimed subject matter.

Furthermore, it is to be understood that the disclosure is defined by the appended claims. Accordingly, the disclosure is not to be restricted except in light of the appended claims and their equivalents.

## Claims

1. A system (10) for secure wireless communications comprising:
a first wireless communication device (14) configured to be disposed on a vehicle (12) and comprising a first signal amplifier (15) configured to amplify a data signal transmitted by the first wireless communication device (14); a second wireless communication device (18) configured to be disposed on a source (16) and to wirelessly communicate data (30) with the first wireless communication device (14), the second wireless communication device (18) comprising a second signal amplifier (15) configured to amplify a second data signal transmitted by the second wireless communication device (18);
at least one information device (20) configured to provide information (32) regarding the vehicle (12) or the source (16);
at least one processor (22) in electronic communication with the at least one information device; and
at least one memory (24) in electronic communication with the at least one processor, wherein the at least one memory comprises programming code (26) for execution by the at least one processor, and the programming code is configured to only activate the first signal amplifier (15) and the second signal amplifier (15) when security parameters (28), stored in the at least one memory, regarding the vehicle (12) or the source (16) are met by both the vehicle (12) and the source (16) based on the information (32) provided by the at least one information device, in order to allow wireless communications of the data between the first wireless communication device (14) and the second wireless communication device (18).

2. The system of claim 1 wherein the vehicle comprises an aircraft.

3. The system of any of claims 1-2 wherein the source comprises an aircraft terminal, a land or sea based antenna, an air-traffic control system, an aircraft, or a satellite.

4. The system of any of claims 1-3 wherein the at least one information device comprises a radio-frequency identification device (20b), a proximity sensor (20a), a sensor, or a security-code providing device (20c).

5. The system of any of claims 1-4 wherein the security parameters comprise a distance requirement between the vehicle and the source.

6. The system of any of claims 1-5 wherein the security parameters comprise an identification of the vehicle or the source.

7. The system of any of claims 1-6 wherein the security parameters comprise a time when the vehicle or the source should be at a certain location.

8. The system of any of claims 1-7 wherein the security parameters comprise a security code.

9. The system of any of claims 1-8 wherein the security parameters comprise a number of conditions, wherein the number of the conditions which must be met to allow wireless communication is based on the type of data to be communicated.

10. The system of any of claims 1-9 wherein the data comprises passenger inflight entertainment data, aircraft information system data, or aircraft control data.

11. A non-transitory computer readable medium including programming code (26) , when executed on a computer, command a processor (22) to:
only activate a first signal amplifier (15) configured to amplify a data signal transmitted by a first wireless communication device (14) of a vehicle (12) and a second signal amplifier (15) configured to amplify a data signal transmitted by a second wireless communication device (18) of a source (16), upon determining that security parameters (28) are satisfied by both the vehicle (12) and the source (16), based on information (32) provided by at least one information device (20), in order to allow wireless communications of the data (30) between the first wireless communication device (14) and the second wireless communication device (18).

12. A method for securely wirelessly communicating comprising:
providing information (32) regarding a vehicle (12) or a source (16) with at least one information device (20); and
only activate a first signal amplifier (15) configured to amplify a data signal transmitted by a first wireless communication device (14) of the vehicle (12) and a second signal amplifier (15) configured to amplify a data signal transmitted by a second wireless communication device (18) of the source (16), upon determining that security parameters (28) are satisfied by both the vehicle (12) and the source (16), based on information (32) provided by at least one information device (20), in order to allow wireless communications of the data (30) between the first wireless communication device (14) and the second wireless communication device (18).

13. The method of claim 12 wherein the vehicle comprises an aircraft.

14. The method of any of claims 12-13 wherein the source comprises an aircraft terminal, a land or sea based antenna, an air-traffic control system, an aircraft, or a satellite.

15. The method of any of claims 12-14 wherein the at least one information device comprises a radio-frequency identification device (20b), a proximity sensor (20a), a sensor, or a security-code providing device (20c).

## Patentansprüche

1. System (10) für sichere drahtlose Kommunikation, wobei das System Folgendes umfasst:
eine erste Vorrichtung (14) für drahtlose Kommunikation, die dazu konfiguriert ist, an einem Fahrzeug (12) angeordnet zu sein und die einen ersten Signalverstärker (15) umfasst, der dazu konfiguriert ist, ein von der ersten Vorrichtung (14) für drahtlose Kommunikation übertragenes Datensignal zu verstärken; eine zweite Vorrichtung (18) für drahtlose Kommunikation umfasst, die dazu konfiguriert ist, an einer Quelle (16) angeordnet zu sein und eine drahtlose Daten (30) -kommunikation mit der ersten Vorrichtung (14) für drahtlose Kommunikation durchzuführen, wobei die zweite Vorrichtung (18) für drahtlose Kommunikation einen zweiten Signalverstärker (15) umfasst, der dazu konfiguriert ist, ein von der zweiten Vorrichtung (18) für drahtlose Kommunikation übertragenes zweites Datensignal zu verstärken;
wenigstens eine Informationsvorrichtung (20), die dazu konfiguriert ist, Informationen (32) betreffend das Fahrzeug (12) oder die Quelle (16) zur Verfügung zu stellen;
wenigstens einen Prozessor (22), der mit der wenigstens einen Informationsvorrichtung elektronisch verbunden ist; und
wenigstens einen Speicher (24), der mit dem wenigstens einen Prozessor elektronisch verbunden ist, wobei der wenigstens eine Speicher einen Programmcode (26) zur Ausführung durch den wenigstens einen Prozessor umfasst, und wobei der Programmcode derart konfiguriert ist, dass er den ersten Signalverstärker (15) und den zweiten Signalverstärker (15) nur dann aktiviert, wenn sowohl das Fahrzeug (12) als auch die Quelle (16) die in dem wenigstens einen Speicher gespeicherten Sicherheitsparameter (28) betreffend das Fahrzeug (12) oder die Quelle (16) erfüllen, und zwar basierend auf von der wenigstens einen Informationsvorrichtung zur Verfügung gestellten Informationen (32), um eine drahtlose Datenkommunikation zwischen der ersten Vorrichtung (14) für drahtlose Kommunikation und der zweiten Vorrichtung (18) für drahtlose Kommunikation zu ermöglichen.

2. System nach Anspruch 1, wobei das Fahrzeug ein Flugzeug umfasst.

3. System nach einem der Ansprüche 1 und 2, wobei die Quelle ein Flugzeugendgerät, eine Land- oder Seeantenne, ein Flugverkehrskontrollsystem, ein Flugzeug oder einen Satelliten umfasst.

4. System nach einem der Ansprüche 1 bis 3, wobei die wenigstens eine Informationsvorrichtung eine Hochfrequenzidentifikationsvorrichtung (20b), einen Näherungssensor (20a), einen Sensor, oder eine Vorrichtung (20c) zur Bereitstellung eines Sicherheitscodes umfasst.

5. System nach einem der Ansprüche 1 bis 4, wobei die Sicherheitsparameter eine Distanzanforderung zwischen dem Fahrzeug und der Quelle umfassen.

6. System nach einem der Ansprüche 1 bis 5, wobei die Sicherheitsparameter eine Identifikation des Fahrzeugs oder der Quelle umfassen.

7. System nach einem der Ansprüche 1 bis 6, wobei die Sicherheitsparameter einen Zeitpunkt umfassen, zu dem das Fahrzeug oder die Quelle an einer gewissen Position sein soll.

8. System nach einem der Ansprüche 1 bis 7, wobei die Sicherheitsparameter einen Sicherheitscode umfassen.

9. System nach einem der Ansprüche 1 bis 8, wobei die Sicherheitsparameter eine Anzahl von Bedingungen umfassen, wobei die Anzahl von Bedingungen, die erfüllt werden müssen, um eine drahtlose Kommunikation zu ermöglichen, auf der Art von zu kommunizierenden Daten basiert.

10. System nach einem der Ansprüche 1 bis 9, wobei die Daten Fluggastunterhaltungsdaten, Flugzeuginformationssystemdaten oder Flugzeugsteuerungsdaten umfassen.

11. Nicht flüchtiges, computerlesbares Medium, das einen Programmcode (26) enthält, der, wenn er auf einem Computer ausgeführt wird, einem Prozessor (22) Folgendes befiehlt:
nur dann Aktivieren eines ersten Signalverstärkers (15), der dazu konfiguriert ist, ein von einer in einem Fahrzeug (12) befindlichen ersten Vorrichtung (14) für drahtlose Kommunikation übertragenes Datensignal zu verstärken, und eines zweiten Signalverstärkers (15), der dazu konfiguriert ist, ein von einer in einer Quelle (16) befindlichen zweiten Vorrichtung (18) für drahtlose Kommunikation übertragenes Datensignal zu verstärken, wenn bestimmt wird, dass sowohl das Fahrzeug (12) als auch die Quelle (16) die Sicherheitsparameter (28) erfüllen, und zwar basierend auf von wenigstens einer Informationsvorrichtung (20) zur Verfügung gestellten Informationen (32), um eine drahtlose Daten (30) -kommunikation zwischen der ersten Vorrichtung (14) für drahtlose Kommunikation und der zweiten Vorrichtung (18) für drahtlose Kommunikation zu ermöglichen.

12. Verfahren für sichere drahtlose Kommunikation, wobei das Verfahren Folgendes umfasst:
mittels wenigstens einer Informationsvorrichtung (20), Bereitstellen von Informationen (32) betreffend ein Fahrzeug (12) oder eine Quelle (16); und
nur dann Aktivieren eines ersten Signalverstärkers (15), der dazu konfiguriert ist, ein von einer in dem Fahrzeug (12) befindlichen ersten Vorrichtung (14) für drahtlose Kommunikation übertragenes Datensignal zu verstärken, und eines zweiten Signal verstärkers (15), der dazu konfiguriert ist, ein von einer in der Quelle (16) befindlichen zweiten Vorrichtung (18) für drahtlose Kommunikation übertragenes Datensignal zu verstärken, wenn bestimmt wird, dass sowohl das Fahrzeug (12) als auch die Quelle (16) die Sicherheitsparameter (28) erfüllen, und zwar basierend auf von wenigstens einer Informationsvorrichtung (20) zur Verfügung gestellten Informationen (32), um eine drahtlose Daten (30) -kommunikation zwischen der ersten Vorrichtung (14) für drahtlose Kommunikation und der zweiten Vorrichtung (18) für drahtlose Kommunikation zu ermöglichen.

13. Verfahren nach Anspruch 12, wobei das Fahrzeug ein Flugzeug umfasst.

14. Verfahren nach einem der Ansprüche 12 und 13, wobei die Quelle ein Flugzeugendgerät, eine Land- oder Seeantenne, ein Flugverkehrskontrollsystem, ein Flugzeug oder einen Satelliten umfasst.

15. Verfahren nach einem der Ansprüche 12 bis 14, wobei die wenigstens eine Informationsvorrichtung eine Hochfrequenzidentifikationsvorrichtung (20b), einen Näherungssensor (20a), einen Sensor, oder eine Vorrichtung (20c) zur Bereitstellung eines Sicherheitscodes umfasst.

## Revendications

1. Système (10) permettant des communications sans fil sécurisées, comprenant:
un premier appareil de communication sans fil (14) conçu pour être disposé au niveau d'un véhicule (12) et comprenant un premier amplificateur de signal (15) conçu pour amplifier un signal de données transmis par le premier appareil de communication sans fil (14) ; un deuxième appareil de communication sans fil (18) conçu pour être disposé au niveau d'une source (16) et pour communiquer sans fil des données (30) avec le premier appareil de communication sans fil (14), le deuxième appareil de communication sans fil (18) comprenant un deuxième amplificateur de signal (15) conçu pour amplifier un deuxième signal de données transmis par le deuxième appareil de communication sans fil (18);
au moins un dispositif d'information (20) conçu pour fournir des informations (32) concernant le véhicule (12) ou la source (16);
au moins un processeur (22) en communication électronique avec l'au moins un dispositif d'information; et
au moins une mémoire (24) en communication électronique avec l'au moins un processeur, ladite au moins une mémoire comprenant un code de programmation (26) destiné à être exécuté par l'au moins un processeur, et le code de programmation est conçu pour n'activer le premier amplificateur de signal (15) et le deuxième amplificateur de signal (15) que lorsque des paramètres de sécurité (28), stockés dans l'au moins une mémoire, concernant le véhicule (12) ou la source (16), sont satisfaits à la fois par le véhicule (12) et la source (16) compte tenu des informations (32) fournies par l'au moins un dispositif d'information, afin de permettre la communication sans fil des données entre le premier appareil de communication sans fil (14) et le deuxième appareil de communication sans fil (18).

2. Système selon la revendication 1, dans lequel le véhicule comprend un avion.

3. Système selon l'une quelconque des revendications 1 et 2, dans lequel la source comprend un terminal d'avion, une antenne terrestre ou marine, un système de commande de trafic aérien, un avion ou un satellite.

4. Système selon l'une quelconque des revendications 1 à 3, dans lequel l'au moins un dispositif d'informations comprend un dispositif de radio-identification (20b), un capteur de proximité (20a), un détecteur ou un dispositif fournisseur de code de sécurité (20c).

5. Système selon l'une quelconque des revendications 1 à 4, dans lequel les paramètres de sécurité comprennent une exigence relative à la distance entre le véhicule et la source.

6. Système selon l'une quelconque des revendications 1 à 5, dans lequel les paramètres de sécurité comprennent une identification du véhicule ou de la source.

7. Système selon l'une quelconque des revendications 1 à 6, dans lequel les paramètres de sécurité comprennent une heure à laquelle le véhicule ou la source doit être à un certain emplacement.

8. Système selon l'une quelconque des revendications 1 à 7, dans lequel les paramètres de sécurité comprennent un code de sécurité.

9. Système selon l'une quelconque des revendications 1 à 8, dans lequel les paramètres de sécurité comprennent un certain nombre de conditions, ledit certain nombre de conditions devant être satisfaites pour permettre la communication sans fil reposant sur le type des données à communiquer.

10. Système selon l'une quelconque des revendications 1 à 9, dans lequel les données comprennent des données de divertissement passager en vol, des données de système d'informations d'avion ou des données de commande d'avion.

11. Support non transitoire lisible par ordinateur comportant un code de programmation (26) qui, lorsqu'il est exécuté sur un ordinateur, est destiné à commander un processeur (22) pour:
activer un premier amplificateur de signal (15) conçu pour amplifier un signal de données transmis par un premier appareil de communication sans fil (14) d'un véhicule (12) et un deuxième amplificateur de signal (15) conçu pour amplifier un signal de données transmis par un deuxième appareil de communication sans fil (18) d'une source (16), qu'en cas de détermination du fait que des paramètres de sécurité (28) sont satisfaits à la fois par le véhicule (12) et la source (16), compte tenu d'informations (32) fournies par au moins un dispositif d'information (20), afin de permettre une communication sans fil des données (30) entre le premier appareil de communication sans fil (14) et le deuxième appareil de communication sans fil (18).

12. Procédé permettant de communiquer sans fil de manière sécurisée, comprenant:
la fourniture d'informations (32) concernant un véhicule (12) ou une source (16) à l'aide d'au moins un dispositif d'information (20), et
l'activation d'un premier amplificateur de signal (15) conçu pour amplifier un signal de données transmis par un premier appareil de communication sans fil (14) du véhicule (12) et d'un deuxième amplificateur de signal (15) conçu pour amplifier un signal de données transmis par un deuxième appareil de communication sans fil (18) de la source (16), qu'en cas de détermination du fait que des paramètres de sécurité (28) sont satisfaits à la fois par le véhicule (12) et la source (16), compte tenu d'informations (32) fournies par au moins un dispositif d'information (20), afin de permettre une communication sans fil des données (30) entre le premier appareil de communication sans fil (14) et le deuxième appareil de communication sans fil (18).

13. Procédé selon la revendication 12, dans lequel le véhicule comprend un avion.

14. Procédé selon l'une quelconque des revendications 12 et 13, dans lequel la source comprend un terminal d'avion, une antenne terrestre ou marine, un système de commande de trafic aérien, un avion ou un satellite.

15. Procédé selon l'une quelconque des revendications 12 à 14, dans lequel l'au moins un dispositif d'information comprend un dispositif de radio-identification (20b), un capteur de proximité (20a), un détecteur, ou un dispositif fournisseur de code de sécurité (20c).
